(19) Europäisches Patentamt
European Patent Office
Office européen des brevets

(11) **EP 3 708 976 A1**

(12) **EUROPÄISCHE PATENTANMELDUNG**

(43) Veröffentlichungstag:
**16.09.2020 Patentblatt 2020/38**

(51) Int Cl.:
*G01F 25/00* (2006.01)      *G01G 17/04* (2006.01)

(21) Anmeldenummer: **19161917.0**

(22) Anmeldetag: **11.03.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Mettler-Toledo GmbH 8606 Greifensee (CH)**

(72) Erfinder:
• **Reber, Daniel**
**8322 Madetswil (CH)**
• **Lang, Christoph**
**8603 Schwerzenbach (CH)**

(74) Vertreter: **Mettler-Toledo**
**IP Department**
**Im Langacher 44**
**8606 Greifensee (CH)**

(54) **VERFAHREN ZUR VERIFIKATION VON PIPETTEN**

(57)    Verfahren zur Verifikation von Pipetten, wobei das Resultat der Verifikation eine Freigabe oder eine Warnmeldung ist, aufweisend die folgenden Schritte: - Bereitstellungeines Flüssigkeitsmessbehälters (110) zur Aufnahme des zu verifizierenden Pipettenflüssigkeitsvolumens ($V_P$), einer in kraftübertragender Weise mit dem Flüssigkeitsmessbehälter (110) verbundene Wägezelle (120), welche ein der auf die Wägezelle (120) einwirkenden Gewichtskraft ($F_G$) entsprechendes Messsignal (ms) ausgibt, und einer zur Erfassung und Verarbeitung des Messsignals (ms) der Wägezelle (120) dienenden Verarbeitungseinheit (130); Bestimmung einer ersten Gewichtskraft ($G_{t1}$) und Bestimmung einer zweiten Gewichtskraft ($G_{t2}$) aus je einem stabilen Messsignal (ms) zum Zeitpunkt ($t_1$) bzw. Zeitpunkt ($t_2$); Berechnung des Pipettenflüssigkeitsvolumens ($V_P$); Zuweisung des errechneten Pipettenflüssigkeitsvolumens ($V_P$) zu einer von mindestens einer Pipettenvolumenklasse ($K_i$) mit einem definierten Klassennominalwert ($VK_i$), Prüfung durch die Verarbeitungseinheit (130) ob der Absolutwert des Differenzvolumen ($\Delta V$) innerhalb eines Toleranzwertes (T) zum Klassennominalmert ($VK_i$) der zugewiesenen Pipettenvolumenklasse ($K_i$) liegt; und Ausgabe des Resultats der Prüfung durch die Verarbeitungseinheit (130).

**Fig. 1**

EP 3 708 976 A1

**Beschreibung**

**Technisches Gebiet**

Die Erfindung betrifft ein Verfahren zur Verifikation von Pipetten und ein Gerät zur Verifikation von Pipetten.

Es ist bekannt, dass Temperatur, Luftdruck und Feuchte eine Waage selbst beeinflusst. Aus diesem Grund werden zur Kompensation der Veränderungen des Wägewertes bei veränderten Umgebungsparametern Korrekturfaktoren im Gerät abgelegt, zum Beispiel in Form von Kurven oder Tabellen. Hierzu werden im Umfeld der Wägezelle, z. B. im Labor, Temperatur- und Luftfeuchtesensoren angeordnet, über die dann eine Korrektur der Waage selbst in Abhängigkeit von den sich ändernden Umgebungsbedingungen automatisch erfolgt.

Die Verdampfung von Wasser während eines Messvorgangs ist ein häufig genanntes Problem. Als Hinweis auf die Größenordnung dieses Effekts kann anhand des folgenden Beispiels veranschaulicht werden: Ein Behälter mit einer Öffnung mit 40 mm Durchmesser hat bei 20 °C hat eine ungefähre Verdampfungsrate von ca. 20 $\mu$g/s.

**Stand der Technik**

Aus der EP 1 975 577 A1 ist eine Waage zur gravimetrischen Kalibrierung von Pipetten bekannt, die über einen Windschutz und eingebaute Temperatur-, Luftdruck- und Luftfeuchtesensoren verfügt.

In EP 3 066 430 B1 ist ein Verfahren zur Kalibrierung einer Pipette mit Hilfe einer Waage offenbart, bei dem während des Kalibriervorgangs eine Verdunstungsrate bestimmt und die Messung mittels in Abhängigkeit von der bestimmten Verdunstungsrate korrigiert wird. Die Verdunstungsrate wird hierbei mittels Daten, die während des Kalibriervorganges durch ein Klimamodul, das einen Luftdrucksensor, einen Luftfeuchtesensor und einen Lufttemperatursensor enthält, aufgezeichnet wurden, korrigiert. Auf diese Weise wird die Messgenauigkeit bzw. die Genauigkeit des Kalibriervorgangs gesteigert, da dem Kalibriervorgangs nicht eine angenommene vordefinierte Verdunstungsrate zugrunde gelegt werden muss, sondern ein realitätsnaher Wert, der von den aktuellen Klimabedingungen während des Kalibriervorgangs abhängt.

Im Gegensatz zu einem Verfahren zur Kalibrierung einer Pipette ist das Verfahren zur Verifizierung einer Pipette vielmehr als einen Leistungsnachweis einer Pipette anzusehen. Basierend auf einer Gewichtsmessung wird definiert, ob das zu prüfende Volumen innerhalb eines vordefinierten Bereichs und einer Toleranz liegt. Daraus lässt sich erkennen, dass das Resultat nicht ein nominaler Wert, sondern ein Status ist. Eine Kalibrierung ist ein zeitlich aufwändiger und kostenintensiver Vorgang, welcher eine genaue Dokumentation nach sich bringt. Im Interwall zwischen zwei Kalibrierungen ist der Anwender im ungewissen, ob das Pipettenvolumen die Kalibriervorgaben noch erfüllen wird. Ein Nichterfüllen der Kalibriervorgaben kann eine ganze Messreihe in Frage stellen bzw. zu kritischen Auswirkungen auf das Geschäft des Anwenders kommen.

Ziel einer Pipettenverifizierung (Pipettenleistungsnachweis) ist es, dem Benutzer oder Anwender ein sofortiges zweckmässiges Feedback - einschließlich einer dokumentierten Bestätigung - zu geben, dass ihre Pipette noch genügend genau und einsatzbereit ist. Zweckmässig bedeutet, dass das Feedback eine Aussage darüber gibt, ob die tatsächliche Prozessgenauigkeit der Pipettierung, die vom Fehler des Pipetteninstruments und möglichen Einflüssen des Benutzers, der Flüssigkeit und der Umgebung abhängt, innerhalb der Grenze einer definierten Toleranz liegt.

Der vorliegenden Erfindung liegt daher die Aufgabe zugrunde, dem Anwender ein vereinfachtes und schnelles Verfahren bereit zu stellen, das minimale manuelle Eingriffe erfordert und eine robuste Leistung aufweist.

Diese Aufgabe wird mit einem Verfahren gelöst, welche die in den unabhängigen Ansprüchen angegebenen Merkmale aufweist. Vorteilhafte Ausgestaltungen der Erfindung sind in den weiteren, abhängigen Ansprüchen angegeben.

**Kurzbeschreibung der Erfindung**

Die Aufgabe wird gelöst durch ein Verfahren zur Verifikation von Pipetten, wobei das Resultat der Verifikation eine Freigabe oder eine Warnmeldung ist, aufweisend die folgenden Schritte: Bereitstellung eines Flüssigkeitsmessbehälters zur Aufnahme des zu verifizierenden Pipettenflüssigkeitsvolumens, einer in kraftübertragender Weise mit dem Flüssigkeitsmessbehälter verbundene Wägezelle, welche ein der auf die Wägezelle einwirkenden Gewichtskraft entsprechendes Messsignal ausgibt, und einer zur Erfassung und Verarbeitung des Messsignals der Wägezelle dienenden Verarbeitungseinheit; Bestimmung einer ersten Gewichtskraft aus dem stabilen Messsignal zum Zeitpunkt $t_1$ eines letzten stabilen Messpunktes durch die Verarbeitungseinheit, wobei dieser letzte stabile Messpunkt zeitlich vor der Aufnahme des zu verifizierenden Pipettenflüssigkeitsvolumens liegt; Bestimmung einer zweiten Gewichtskraft aus dem stabilen Messsignal zum Zeitpunkt $t_2$ eines neuen stabilen Messpunktes durch die Verarbeitungseinheit, wobei dieser neue stabile Messpunkt zeitlich nach Aufnahme des zu verifizierenden Pipettenflüssigkeitsvolumens liegt; Berechnung des Pipettenflüssigkeitsvolumens durch die Verarbeitungseinheit nach der Formel: $V_P = \rho^{-1} \times (G_{t2} - G_{t1})$; Zuweisung des errechneten Pipettenflüssigkeitsvolumens zu einer von mindestens einer Pipettenvolumenklasse mit einem definierten Klassennominalwert, wobei die Zuweisung durch die Verarbeitungseinheit daraufhin erfolgt, dass der Absolutwert eines Differenzvolumens zwischen Pipettenflüssigkeitsvolumens und Klassennominalmert möglichst gering ist; Prüfung durch die Verarbeitungseinheit ob der Absolutwert des Differenzvolumen innerhalb eines Toleranzwertes zum Klassennominalmert der zugewiesenen Pipettenvolumenklasse liegt; und Ausgabe des Resultats der Prüfung durch die Verarbeitungseinheit als Freigabe, wenn das Differenzvolumen innerhalb des Toleranzwertes liegt, oder als Warnmeldung, wenn das Differenzvolumen ausserhalb des Toleranzwertes liegt.

Vorteile des Verfahren ergeben sich für den Anwender dadurch, dass das Kalibrierungsintervall nicht durch empirisch bestimmte Daten definiert werden muss, sondern gezielt auf den Anforderungen des Anwenders zugeschnitten werden kann. So kann eine nötige Kalibrierung der Pipette erkannt werden, wenn diese entsprechend den Auswirkungen des Pipettierens auf das Geschäft des Anwenders und der Pipettierprozess-Toleranz nötig wird. Für den Anwender kann dies zu einem verlängerten Kalibrierungsintervall führen und so zu Kosteneinsparungen aufgrund (zurecht) aufgeschobener Kalibrierungen. Im Falle eines verkürzten Kalibrierungsintervalls führt dies zu einer Qualitätsverbesserung des Pipettierprozesses, was je nach Geschäft der Anwenders Materialverluste, nicht spezifikationsgetreue Ergebnisse, Zeitverluste, Nachbesserungen, Produktrückruf oder Reputationsschaden verringert oder verhindert. Das Kalibrierungsintervall kann aber auch unverändert bleiben, wodurch eine fehlerhafte Pipette rechtzeitig entdeckt werden würde, um so früher der Kalibration zugeführt zu werden. Unentdeckte fehlerhafte Pipetten können ganze Messreihen in Frage stellen, da es z.B. oft nicht ersichtlich ist wenn eine Pipette durch das Fallenlassen nicht mehr ordnungsgemäss funktioniert.

Die Prüfung durch die Verarbeitungseinheit (130) kann basierend auf einer vordefinierten Anzahl an Aufnahmen des zu verifizierenden Pipettenflüssigkeitsvolumens ($V_P$) in den Flüssigkeitsmessbehälter vorgenommen werden. Das heisst, dass eine mehrmalige Aufnahme des zu verifizierenden Pipettenflüssigkeitsvolumens ($V_P$) hintereinander, jeweils nach Signalisierung an den Bediener, erfolgt und die Prüfung anhand der mehrfach vorliegenden Berechnungen des Pipettenflüssigkeitsvolumens stattfindet. Es wird sozusagen eine statistische Mehrfachmessung druchgeführt.

Beim Einbringen des zu verifizierenden Pipettenflüssigkeitsvolumens ist zu beachten, dass dieses auf einmal aus der Pipette in den Flüssigkeitsmessbehälter eingebracht wird, oder zumindest tropfenweise so, dass das Messsignal der Wägezelle erst nach vollständigem Entleeren der Pipette als von der Verarbeitungseinheit als stabil ausgewiesen wird.

Als ein stabiles Messsignal wird ein Signal angesehen, welches sich innerhalb eines Signalbands mit definierter zeitlicher Länge und Signalhöhe befindet. Das heisst, dass vom Zeitpunkt eines Messsignalswertes alle über einen gewissen Zeitraum vorangehenden Messsignalswerte maximal um eine definierte Differenz abweichen dürfen.

Vorteilhafterweise läuft das Verfahren vollautomatisiert ab, wobei die Aufnahme des zu verifizierenden Pipettenflüssigkeitsvolumens in den Flüssigkeitsmessbehälter die Verifizierung durch die Verarbeitungseinheit auslöst, und wobei nach Ausgabe des Resultats der Prüfung die Verarbeitungseinheit bereit ist ein nächstes zu verifizierendes Pipettenflüssigkeitsvolumen aufzunehmen und zu verifizieren. Das Verfahren zeigt das Ergebnis der Prüfung ohne zusätzliche Interaktion des Anwenders an, und wechselt nach der Anzeige des Ergebnisses in eine Bereitschaft um weitere Verifizierungen durchzuführen.

Ferner kann das Verfahren die folgenden Schritte aufweisen: Bestimmung einer Verdunstungsrate der im Flüssigkeitsmessbehälter befindlichen Flüssigkeit durch Verarbeitung des Messsignals über eine voranliegende und spätestens zum Zeitpunkt $t_1$ abschliessende Zeitspanne, Berechnung des Verdunstungsvolumens zwischen dem Zeitpunkt $t_1$ und dem Zeitpunkt $t_2$; und Berechnung des Pipettenflüssigkeitsvolumens nach der Formel: $V_P = \rho^{-1} \times (G_{t2} - G_{t1} + c_v \times (t_2 - t_1))$. Vorteilhafterweise beträgt die Zeitspanne mindestens einschliesslich zehn Sekunden, und/oder maximal einschliesslich dem zehnfachen der Zeitdifferenz zwischen Zeitpunkt $t_1$ und Zeitpunkt $t_2$. Weiter vorteilhaft ist es Anhand eines Referenzwertes die Gültigkeit der Verdunstungsrate zu überprüfen.

In einer Weiterentwicklung des Verfahrens wird das Verfahren ohne Ausgabe eines Resultats beendet, wenn die Gewichtskraftdifferenz kleiner als ein vorgegebener Wert ist, oder mit Ausgabe einer Warnmeldung beendet, wenn die auf die Wägezelle einwirkende Gewichtskraft grösser als ein vorgegebener Wert ist, oder wenn das Messsignal nicht innerhalb einer definierten Zeitdauer einen stabilen Zustand eingenommen hat.

Eine Weiterbildung des Verfahrens ist dadurch gekennzeichnet, dass die Ausgabe des Resultats der Prüfung in Form eines visuellen, akustischen und/oder elektrischen Signals erfolgt. Vorteilhafterweise wird das Resultat der Prüfung mittels einer mehrfarbigen LED für jede Pipettenvolumenklasse als visuelles Signal ausgegeben. Weiter kann nach Ausgabe des Resultats der Prüfung und einer definierten Ausgabezeitdauer des visuellen Signals alle LEDs mit gleichzeitigem Blinken die Verifikation als beendet und die Bereitschaft für eine weitere oder neue Verifikation signalisieren.

In einer weiteren Weiterentwicklung des Verfahrens weist dieses ferner die folgenden Schritte auf: Bereitstellung eines Identifikationssensors zum Identifizieren einer Pipette, und eines Datenbanksystems zur Speicherung von Prüfresultaten einer Verifikation; Erfassen eines Identifikationsmerkmals der Pipette, mit welchem eine Pipette eindeutig und unverwechselbar identifiziert werden kann; Ablegen des Prüfresultats der Verifikation der Pipette im Datenbanksystem.

Das erfinderische Verfahren wie oben beschrieben ist auf einer Vorrichtung ausführbar, wobei diese Vorrichtung einen Flüssigkeitsmessbehälter zur Aufnahme eines zu verifizierenden Pipettenflüssigkeitsvolumens, eine in kraftübertragender Weise mit dem Flüssigkeitsmessbehälter verbundene Wägezelle, welche ein der auf die Wägezelle einwirkenden Gewichtskraft entsprechendes Messsignal ausgibt, und eine zur Erfassung und Verarbeitung des Messsignals der Wägezelle dienende Verarbeitungseinheit zum Ausführen des Verfahrens aufweist. Vorteilhafterweise weist die Öffnung des bereitgestellten Flüssigkeitsmessbehälters einen minimalen Öffnungsquerschnitt von und einschliesslich 100 mm² auf.

Einzelheiten der erfindungsgemässen Kraftmessvorrichtung, des erfindungsgemässen Kraftmessmoduls und des erfindungsgemässen Verfahrens ergeben sich anhand der Beschreibung der in den Zeichnungen dargestellten Ausführungsbeispiele. Es zeigen:

Fig. 1 einen schematischen Aufbau einer Ausführungsform der erfinderischen Vorrichtung;

Fig. 2 einen Messsignalverlauf bei Aufnahme des zu verifizierenden Pipettenflüssigkeitsvolumens;

Fig. 3 Bestimmung eines stabilen Messsignals durch die Verarbeitungseinheit; und

Fig. 4 ein Diagramm des Kalibrations- und Verifikationsintervall einer Pipette.

**Kurze Beschreibung der Zeichnungsfiguren**

Merkmale mit gleicher Funktion und ähnlicher Ausgestaltung sind in der folgenden Beschreibung mit denselben Bezugszeichen versehen.

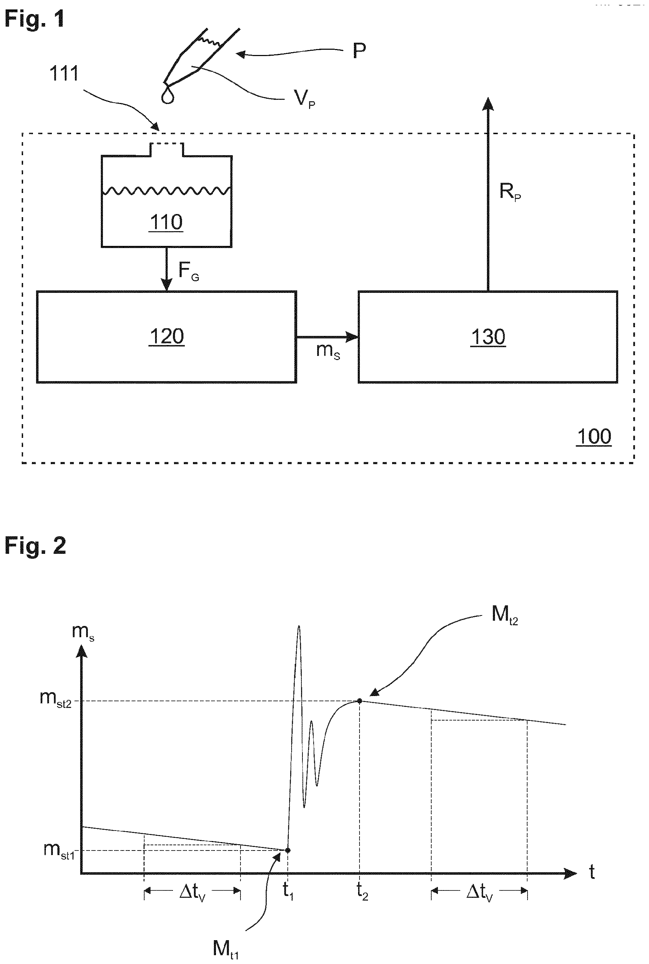

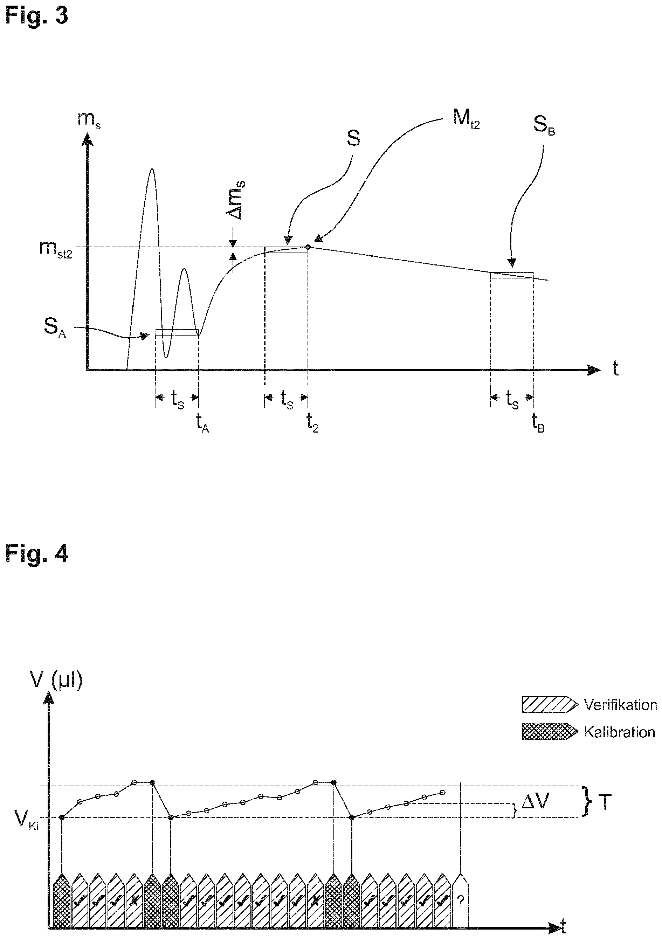

Figur 1 zeigt schematisch die Vorrichtung 100 zum Verifizieren von Pipetten. Die hier gezeigte Vorrichtung 100 besteht aus einen Flüssigkeitsmessbehälter 110, einer Wägezelle 120 und einer Verarbeitungseinheit 130. Der Flüssigkeitsmessbehälter 110 weist eine Öffnung 111 auf, durch welche das zu verifizierende Pipettenflüssigkeitsvolumen $V_P$ von der Pipette P eingebracht werden kann. Hierbei ist zu beachten, dass das zu verifizierende Pipettenflüssigkeitsvolumen $V_P$ auf einmal aus der Pipette P in den Flüssigkeitsmessbehälter 110 eingebracht wird, oder zumindest tropfenweise so, dass das Messsignal $m_S$ der Wägezelle 120 erst nach vollständigem Entleeren der Pipette P als von der Verarbeitungseinheit 130 als stabil ausgewiesen wird (siehe Beschreibung zu Figur 3). Mit der Wägezelle 120 ist der Flüssigkeitsmessbehälter 110 in kraftübertragender Weise verbunden, so dass dieser eine auf die Wägezelle 120 einwirkende Gewichtskraft $F_G$ ausübt, die als Messsignal ms fortlaufend an eine Verarbeitungseinheit 130 ausgegeben wird. Die Verarbeitungseinheit 130 dient zur Erfassung und Verarbeitung des Messsignals $m_S$ der Wägezelle 120 und zur Ausführung des Verfahrens. Das Resultat der Prüfung ($R_P$) wird in Form eines visuellen, akustischen und/oder elektrischen Signals ausgeben.

Die eingebrachte Pipettenflüssigkeit verbleibt im Flüssigkeitsmessbehälter 110, welcher so durch jede weitere Verifikation mehr und mehr gefüllt wird. Erreicht die auf die Wägezelle 120 einwirkende Gewichtskraft $F_G$ des Flüssigkeitsmessbehälters 110 ein oberes Limit wird dies durch die Verarbeitungseinheit 130 anhand des Messsignals $m_S$ erkannt und dem Anwender signalisiert. Bis zur Erreichung dises oberen Limits läuft das Verfahren ununterbrochen, das heisst, dass die Verarbeitungseinheit 130 das Messsignal $m_s$ der Wägezelle 120 ohne Unterbruch auswertet. Der Anwender bringt also nur das Pipettenflüssigkeitsvolumen Vp in den Flüssigkeitsmessbehälter 110 ein, wodurch das Messsignal $m_s$ der Wägezelle 120 ausschlägt. Dieser Ausschlag startet das Verifizierungsverfahren wie im Weiteren zu Figur 2 beschrieben wird.

Anhand des Messsignalverlaufs aus Figur 2 wird das erfinderische Verfahren nun genauer beschrieben. Der Messsignalverlauf wird vor und nach einer Aufnahme eines zu verifizierenden Pipettenflüssigkeitsvolumens gezeigt, welche dadurch zu erkennen ist, dass das Messsignal zwischen dem Zeitpunkt $t_1$ und dem Zeitpunkt $t_2$ unstetig ist bzw. dass es ausschlägt.

Der Vorgang wird durch den Anwender begonnen, indem er das zu verifizierende Pipettenflüssigkeitsvolumen $V_P$ in den Flüssigkeitsmessbehälter 110 einbringt. Der Ausschlag des Messsignals startet nun die Messsignalauswertung. Aus dem stabilen Messsignal $m_s$ zum Zeitpunkt $t_1$ eines letzten stabilen Messpunktes $M_{t1}$ wird durch die Verarbeitungseinheit eine erste Gewichtskraft $G_{t1}$ bestimmt. Diese Gewichtskraft entspricht der bereits im Flüssigkeitsmessbehälter 110 befindlichen Flüssigkeitsmenge. Aus dem stabilen Messsignal $m_s$ zum Zeitpunkt $t_2$ eines neuen stabilen Messpunktes $M_{t2}$ wird durch die Verarbeitungseinheit 130 eine zweite Gewichtskraft $G_{t2}$ bestimmt. Diese Gewichtskraft entspricht der Summe aus der bereits im Flüssigkeitsmessbehälter 110 befindlichen Flüssigkeitsmenge plus des eingebrachten zu verifizierenden Pipettenflüssigkeitsvolumens $V_P$. Das Pipettenflüssigkeitsvolumens $V_P$ kann nun nach der Formel $V_P = \rho^{-1} \times (G_{t2} - G_{t1})$ berechnet werden.

Das errechnete Pipettenflüssigkeitsvolumens $V_P$ wird zu einer Pipettenvolumenklasse $K_i$ mit einem definierten Klassennominalwert $V_{Ki}$ zugewiesen. Die Vorrichtung kann auf einige wenige Volumina voreingestellt sein, z.B. 20 µl, 100 µl, 200 µl und 1000 µl mit jeweils eigener Toleranz. Die Zuweisung erfolgt daraufhin, dass der Absolutwert eines Differenzvolumens $\Delta V$ zwischen Pipettenflüssigkeitsvolumens $V_P$ und dem Klassennominalwert $V_{Ki}$ möglichst gering ist. Nun kann geprüft werden ob der Absolutwert des Differenzvolumen $\Delta V$ innerhalb eines Toleranzwertes T zum Klassennominalwert $V_{Ki}$ der zugewiesenen Pipettenvolumenklasse $K_i$ liegt. Wenn das Differenzvolumen $\Delta V$ innerhalb des Toleranzwertes T liegt, erfolgt als Ausgabe des Resultats der Prüfung die Freigabe, ansonsten erfolgt eine Warnmeldung, wenn das Differenzvolumen $\Delta V$ ausserhalb des Toleranzwertes T liegt.

Ein Messsignal $m_S$ wird dann von der Verarbeitungseinheit 130 als stabil ausgewiesen (siehe Figur 3), wenn es sich innerhalb eines Signalbandes S mit einer zeitlich definierten Länge $t_S$ und mit maximalem Signalunterschied respektive Signalhöhe $\Delta m_s$ befindet. Das heisst, dass vom Zeitpunkt eines Messsignalswertes alle über eine gewisse Zeit vorangehenden Messsignalswerte maximal um eine definierte Differenz abweichen dürfen. Die Definierung dieser Parameter beeinflusst massgeblich wie schnell die Verarbeitungseinheit 130 einen stabilen Messpunkt $M_{ti}$ bestimmt. Hierbei soll in Betracht gezogen werden, dass der Anwender das zu verifizierende Pipettenflüssigkeitsvolumen $V_P$ möglichst ohne Unterbruch in den Flüssigkeitsbehälter 110 eingeben soll. Auch soll, bei einem versehentlichen Unterbruch, die Verarbeitungseinheit 130 das Messsignal $m_S$ nicht zu frühzeitig (durch die Parameterwahl) als stabil ausgeben. Das Messsignal $m_S$ zum Zeitpunkt $t_A$ wird nicht als stabil ausgewiesen, da sich dieses über die voranliegende Zeitspanne $t_S$ nicht jederzeit innerhalb Signalband $S_A$ befunden hat. Anders hingegen zum Zeitpunkt $t_B$ und zum Zeitpunkt $t_2$, an welchen das Messsignal $m_S$ als stabil ausgewiesen wird.

Im weiteren kann das Verfahren ferner eine Verdunstungsrate $c_V$ der im Flüssigkeitsmessbehälter 110 befindlichen Flüssigkeit durch Verarbeitung des Messsignals $m_s$ bestimmen, indem es über eine voranliegende und spätestens zum Zeitpunkt $t_1$ abschliessende Zeitspanne $\Delta t_V$ den Gewichtsverlust erfasst. Mit diese Verdunstungsrate $c_V$ kann nun das Verdunstungsvolumen $V_V$ zwischen dem Zeitpunkt $t_1$ und dem Zeitpunkt $t_2$ bestimmt werden. Unter Miteinbezug dieser Werte kann das Pipettenflüssigkeitsvolumens $V_P$ nach der Formel: $V_P = \rho^{-1} \times (G_{t2} - G_{t1} + c_v \times (t_2 - t_1))$ noch genauer berechnet werden.

Die Bestimmung der Verdunstungsrate $c_V$ erfolgt immer mittels einem stabilen Messsignal nach dem Zeitpunkt $t_2$ und vor dem Zeitpunkt $t_1$, wobei die Dauer über eine Zeitspanne $\Delta t_V$ von mindestens einschliesslich zehn Sekunden, und/oder maximal einschliesslich dem zehnfachen der Zeitdifferenz zwischen Zeitpunkt $t_1$ und Zeitpunkt $t_2$ beträgt. In der Zeitspanne $\Delta t_V$ kann die Bestimmung der Verdunstungsrate $c_V$ auch fortlauflaufend erfolgen. Anhand eines Referenzwertes kann die Gültigkeit der Verdunstungsrate $c_V$ überprüft werden.

Nun kann es vorkommen, dass die Gewichtskraftdifferenz $\Delta G_t$ kleiner als ein vorgegebener Wert ist. In diesem Fall wird das Verfahren ohne Ausgabe eines Resultats beendet. Ebenso kann ein auf die Wägezelle 120 einwirkende Gewichtskraft $F_G$ grösser als ein vorgegebener Wert sein, wobei dann das Verfahren mit Ausgabe einer Warnmeldung beendet wird. Werden die dieser Parameter für die Bestimmung eines stabilen Messpunktes $M_{ti}$ zu eng definiert, besteht die Möglichkeit, dass das Messsignal $m_s$ nicht innerhalb einer definierten Zeitdauer einen für die Verarbeitungseinheit als stabile geltenden Zustand einnehmen kann. Das Verfahren wird dann mit Ausgabe einer Warnmeldung beendet.

Die vordefinierten Volumina können durch jeweils drei LEDs, z.B. grün, orange und rot, angezeigt werden. Wird ein neues Resultat ausgegeben so wird die entsprechende LED für einen bestimmten Zeitraum auf Dauerlicht geschaltet. Nach Ablauf dieses Zeitraums wird die LED in einen Blinkmodus geschaltet, was dem Anwender weiterhin das Resultat signalisiert, aber auch die Bereitschaft für die nächste Prüfung anzeigt. Wenn der Flüssigkeitsmessbehälter 110 voll ist, wird das Resultat wie oben vorhin beschrieben angezeigt, jedoch blinken zusätzlich alle anderen LEDs, beispielsweise in Rot mit einem kurz-an lang-aus Muster.

Das Verfahren ist vollautomatisiert und nur die Bedienung der Pipette durch den Anwender ist erforderlich. Die Vorrichtung erkennt den Vorgang und zeigt das Ergebnis ohne zusätzliche Interaktion des Anwenders an.

In Figur 4 ist der Kalibrations- und Verifikationsintervall einer Pipette dargestellt. Eine Pipette wird im Werk kalibriert, bevor diese an den Anwender ausgeliefert wird. Zwischen zwei regelmässigen Kalibrierungen einer Pipette werden Verifikationen - auch Schnellprüfungen genannt - gemäss dem erfinderischen Verfahren durchgeführt. Die Häufigkeit dieser Schnellprüfungen wird dem Anwender durch eine Risikobewertung empfohlen, die auf zwei spezifischen Kriterien basiert: A) die Auswirkungen des Pipettierens auf das Geschäft des Anwenders und B) die Pipettier- Pipettierprozess-toleranz. Daraus kann abgeleitet werden, in welchem zeitlichen Abstand eine Pipette eine Kalibrierung durchlaufen muss, und welche Toleranz eingehalten beim Pipettierprozess einzuhalten ist.

Zwischen den Kalibrierungen der Pipette wird nun das erfinderische Verfahren angewendet um dem Anwender ein sofortiges Feedback zu geben, dass die Pipette noch genügend genau und einsatzbereit ist. Sollte das Feeback negativ sein, so kann die Pipette bereits vor dem Ablauf des Kalibrationsintervalls einer Kalibrierung unterzogen werden. Eine solche frühzeitige Erkennung kann verhindern, dass es zu kritischen Auswirkungen auf das Geschäft des Anwenders kommt.

Je nach Geschäft des Anwenders kann auch in Betracht gezogen werden das Kalibrationsintervall zu verlängern, um so die Kosten für die aufwändigere Kalibrierung zu senken und die Zeit in der die Pipette nicht zur Verfügung steht zu verringern.

**Liste der Bezugszeichen**

| | |
|---|---|
| 110 | Flüssigkeitsmessbehälter |
| 120 | Wägezelle |
| 130 | Verarbeitungseinheit |
| P | Pipette |
| $V_P$ | Pipettenflüssigkeitsvolumen |
| $F_G$ | Gewichtskraft |
| $m_S$ | Messsignal |
| $G_{t1}$ | erste Gewichtskraft |
| $M_{t1}$ | stabiler Messpunkt zum Zeitpunkt t1 |

| | |
|---|---|
| $G_{t2}$ | zweite Gewichtskraft |
| $M_{t2}$ | stabiler Messpunkt zum Zeitpunkt t2 |
| $\Delta t$ | Zeitspanne zur Bestimmung einer Verdunstungsrate |
| $\rho$ | Dichte der Pipettenflüssigkeit |
| $K_i$ | Pipettenvolumenklasse |
| $V_{Ki}$ | Klassennominalwert |
| $\Delta V$ | Differenzvolumen |
| T | Toleranzwert |
| S, $S_A$, $S_B$ | Signalband |
| $t_S$ | Zeitliche Länge des Signalbandes |
| $\Delta m_S$ | Signalhöhe |
| $c_V$ | Verdunstungsrate |
| $V_V$ | Verdunstungsvolumen |
| $\Delta G_t$ | Gewichtskraftdifferenz |
| $R_P$ | Resultat der Prüfung |

**Patentansprüche**

1. Verfahren zur Verifikation von Pipetten, wobei das Resultat der Verifikation eine Freigabe oder eine Warnmeldung ist, aufweisend die folgenden Schritte:

- Bereitstellung
eines Flüssigkeitsmessbehälters (110) zur Aufnahme eines zu verifizierenden Pipettenflüssigkeitsvolumens ($V_P$),
einer in kraftübertragender Weise mit dem Flüssigkeitsmessbehälter (110) verbundene Wägezelle (120), welche ein der auf die Wägezelle (120) einwirkenden Gewichtskraft ($F_G$) entsprechendes Messsignal ($m_s$) ausgibt, und
einer zur Erfassung und Verarbeitung des Messsignals ($m_s$) der Wägezelle (120) dienenden Verarbeitungseinheit (130);
- Bestimmung einer ersten Gewichtskraft ($G_{t1}$) aus dem stabilen Messsignal ($m_s$) zum Zeitpunkt ($t_1$) eines letzten stabilen Messpunktes ($M_{t1}$) durch die Verarbeitungseinheit (130), wobei dieser letzte stabile Messpunkt ($M_{t1}$) zeitlich vor der Aufnahme des zu verifizierenden Pipettenflüssigkeitsvolumens ($V_P$) liegt;
- Bestimmung einer zweiten Gewichtskraft ($G_{t2}$) aus dem stabilen Messsignal ($m_s$) zum Zeitpunkt ($t_2$) eines neuen stabilen Messpunktes ($M_{t2}$) durch die Verarbeitungseinheit (130), wobei dieser neue stabile Messpunkt ($M_{t2}$) zeitlich nach Aufnahme des zu verifizierenden Pipettenflüssigkeitsvolumens ($V_P$) liegt;
- Berechnung des Pipettenflüssigkeitsvolumens ($V_P$) durch die Verarbeitungseinheit (130) nach der Formel:

$$V_P = \rho^{-1} \times (G_{t2} - G_{t1});$$

- Zuweisung des errechneten Pipettenflüssigkeitsvolumens ($V_P$) zu einer von mindestens einer Pipettenvolumenklasse ($K_i$) mit einem definierten Klassennominalwert ($V_{Ki}$), wobei die Zuweisung durch die Verarbeitungseinheit (130) daraufhin erfolgt, dass der Absolutwert eines Differenzvolumens ($\Delta V$) zwischen Pipettenflüssigkeitsvolumens ($V_P$) und Klassennominalmert ($V_{Ki}$) möglichst gering ist;
- Prüfung durch die Verarbeitungseinheit (130) ob der Absolutwert des Differenzvolumen ($\Delta V$) innerhalb eines Toleranzwertes (T) zum Klassennominalmert ($V_{Ki}$) der zugewiesenen Pipettenvolumenklasse ($K_i$) liegt; und
- Ausgabe des Resultats der Prüfung ($R_P$) durch die Verarbeitungseinheit (130)
als Freigabe, wenn das Differenzvolumen ($\Delta V$) innerhalb des Toleranzwertes (T) liegt, oder
als Warnmeldung, wenn das Differenzvolumen ($\Delta V$) ausserhalb des Toleranzwertes (T) liegt.

2. Verfahren nach Anspruch 1, **dadurch gekennzeichnet, dass**
die Prüfung durch die Verarbeitungseinheit (130) basierend auf einer vordefinierten Anzahl an Aufnahmen des zu verifizierenden Pipettenflüssigkeitsvolumens (Vp) vorgenommen wird.

3. Verfahren nach Anspruch 1 oder 2, **dadurch gekennzeichnet, dass**
ein stabiles Messsignal ($m_s$) dadurch bestimmt wird, dass das Messsignal ($m_s$) sich innerhalb eines Sgnalbands (S) mit definierter zeitlicher Länge ($t_L$) und Signalhöhe ($\Delta m_s$) befindet.

4. Verfahren nach einem der Ansprüche 1 bis 3, **dadurch gekennzeichnet, dass**
das Verfahren vollautomatisiert abläuft, wobei die Aufnahme des zu verifizierenden Pipettenflüssigkeitsvolumens ($V_P$) in den Flüssigkeitsmessbehälter (110) die Verifizierung durch die Verarbeitungseinheit (130) auslöst, und wobei nach Ausgabe des Resultats der Prüfung die Verarbeitungseinheit (130) bereit ist ein nächstes zu verifizierendes Pipettenflüssigkeitsvolumen ($V_P$) aufzunehmen und zu verifizieren.

5. Verfahren nach einem der Ansprüche 1 bis 4, **dadurch gekennzeichnet, dass**
das Verfahren ferner die folgenden Schritte aufweist:

- Bestimmung einer Verdunstungsrate ($c_V$) der im Flüssigkeitsmessbehälter (110) befindlichen Flüssigkeit durch Verarbeitung des Messsignals ($m_s$) über eine voranliegende und spätestens zum Zeitpunkt ($t_1$) abschliessende Zeitspanne ($\Delta t_V$);
- Berechnung des Verdunstungsvolumens ($V_V$)

zwischen dem Zeitpunkt ($t_1$) und dem Zeitpunkt ($t_2$); und

- Berechnung des Pipettenflüssigkeitsvolumens ($V_P$) nach der Formel:

$$V_P = \rho^{-1} \times \left( G_{t2} - G_{t1} + c_V \times (t_2 - t_1) \right)$$

6. Verfahren nach Anspruch 5, **dadurch gekennzeichnet, dass**
die Zeitspanne ($\Delta t_V$) mindestens einschliesslich zehn Sekunden, und/oder maximal einschliesslich dem zehnfachen der Zeitdifferenz zwischen Zeitpunkt ($t_1$) und Zeitpunkt ($t_2$) beträgt.

7. Verfahren nach einem der Ansprüche 5 oder 6, **dadurch gekennzeichnet, dass** Anhand eines Referenzwertes die Gültigkeit der Verdunstungsrate ($c_V$) überprüft wird.

8. Verfahren nach einem der Ansprüche 1 bis 7, **dadurch gekennzeichnet, dass**
wenn die Gewichtskraftdifferenz ($\Delta G_t$) kleiner als ein vorgegebener Wert ist, das Verfahren ohne Ausgabe eines Resultats beendet wird.

9. Verfahren nach einem der Ansprüche 1 bis 8, **dadurch gekennzeichnet, dass**
wenn die auf die Wägezelle (120) einwirkende Gewichtskraft ($F_G$) grösser als ein vorgegebener Wert ist, das Verfahren mit Ausgabe einer Warnmeldung beendet wird.

10. Verfahren nach einem der Ansprüche 1 bis 9, **dadurch gekennzeichnet, dass**
wenn das Messsignal ($m_s$) nicht innerhalb einer definierten Zeitdauer einen stabilen Zustand eingenommen hat, das Verfahren mit Ausgabe einer Warnmeldung beendet wird.

11. Verfahren nach einem der Ansprüche 1 bis 10, **dadurch gekennzeichnet, dass**
die Ausgabe des Resultats der Prüfung in Form eines visuellen, akustischen und/oder elektrischen Signals erfolgt.

12. Verfahren nach Anspruch 11, **dadurch gekennzeichnet, dass**
das Resultat der Prüfung mittels einer mehrfarbigen LED für jede Pipettenvolumenklasse ($K_i$) als visuelles Signal ausgegeben wird.

13. Verfahren nach Anspruch 12, **dadurch gekennzeichnet, dass**
nach Ausgabe des Resultat der Prüfung und einer definierten Ausgabezeitdauer des visuellen Signals alle LEDs mit gleichzeitigem Blinken die Verifikation als beendet und die Bereitschaft für eine weitere Verifikation signalisieren.

14. Verfahren nach einem der Ansprüche 1 bis 13, **dadurch gekennzeichnet, dass**
das Verfahren ferner die folgenden Schritte aufweist:

- Bereitstellung
eines Identifikationssensors zum Identifizieren einer Pipette, und
eines Datenbanksystems zur Speicherung von Prüfresultaten einer Verifikation;
- Erfassen eines Identifikationsmerkmals der Pipette, mit welchem eine Pipette eindeutig und unverwechselbar identifiziert werden kann;
- Ablegen des Prüfresultats der Verifikation der Pipette im Datenbanksystem.

15. Vorrichtung (100) zum Verifizieren von Pipetten, aufweisend

einen Flüssigkeitsmessbehälter (110) zur Aufnahme eines zu verifizierenden Pipettenflüssigkeitsvolumens ($V_P$),
eine in kraftübertragender Weise mit dem Flüssigkeitsmessbehälter (110) verbundene Wägezelle (120), welche ein der auf die Wägezelle (120) einwirkenden Gewichtskraft ($F_G$) entsprechendes Messsignal ($m_s$) ausgibt, und
eine zur Erfassung und Verarbeitung des Messsignals ($m_s$) der Wägezelle (120) dienenden Verarbeitungseinheit (130) zum Ausführen des Verfahrens nach einem der Ansprüche 1 bis 14.

# Fig. 1

# Fig. 2

**Fig. 3**

**Fig. 4**

**Europäisches Patentamt**
**European Patent Office**
**Office européen des brevets**

# EUROPÄISCHER RECHERCHENBERICHT

Nummer der Anmeldung

EP 19 16 1917

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | 1wmpd4001794e: "Pipette Accuracy Tester PT-Series AD-4212B-PT AD-4212A-PT FX-300i-PT INSTRUCTION MANUAL", , 1. Januar 2015 (2015-01-01), XP055621812, Gefunden im Internet: URL:https://www.aandd.jp/products/manual/test_measuring/pipette.pdf [gefunden am 2019-09-12] * das ganze Dokument * | 1-15 | INV. G01F25/00 G01G17/04 |
| X | "Gilson guide to pipetting Gilson guide to pipetting Second Edition", GILSON QUIDE TO PIPETTING.,, 15. Dezember 2005 (2005-12-15), XP055149720, * das ganze Dokument * | 1-15 | |
| X,D | EP 3 066 430 A1 (SARTORIUS LAB INSTR GMBH & CO KG [DE]) 14. September 2016 (2016-09-14) * Absätze [0002], [0018], [0029], [0063] - [0067] * | 1,15 | |

RECHERCHIERTE SACHGEBIETE (IPC)

G01F
G01G

Der vorliegende Recherchenbericht wurde für alle Patentansprüche erstellt

| Recherchenort | Abschlußdatum der Recherche | Prüfer |
|---|---|---|
| Den Haag | 16. September 2019 | Mihai Vasile |

**ANHANG ZUM EUROPÄISCHEN RECHERCHENBERICHT
ÜBER DIE EUROPÄISCHE PATENTANMELDUNG NR.**

EP 19 16 1917

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-09-2019

| Im Recherchenbericht angeführtes Patentdokument | Datum der Veröffentlichung | Mitglied(er) der Patentfamilie | Datum der Veröffentlichung |
|---|---|---|---|
| EP 3066430 A1 | 14-09-2016 | CN 105705914 A | 22-06-2016 |
| | | CN 105705915 A | 22-06-2016 |
| | | CN 105705916 A | 22-06-2016 |
| | | CN 105705917 A | 22-06-2016 |
| | | CN 105705918 A | 22-06-2016 |
| | | DE 102014101558 A1 | 13-05-2015 |
| | | DE 102014101561 A1 | 13-05-2015 |
| | | DE 102014101563 A1 | 13-05-2015 |
| | | DE 102014101565 A1 | 13-05-2015 |
| | | DE 102014101566 A1 | 13-05-2015 |
| | | EP 3066429 A1 | 14-09-2016 |
| | | EP 3066430 A1 | 14-09-2016 |
| | | EP 3066431 A1 | 14-09-2016 |
| | | EP 3066432 A1 | 14-09-2016 |
| | | EP 3066433 A1 | 14-09-2016 |
| | | US 2016250628 A1 | 01-09-2016 |
| | | US 2016252386 A1 | 01-09-2016 |
| | | US 2016252388 A1 | 01-09-2016 |
| | | US 2016252389 A1 | 01-09-2016 |
| | | US 2017023400 A1 | 26-01-2017 |
| | | US 2019137325 A1 | 09-05-2019 |
| | | WO 2015067330 A1 | 14-05-2015 |
| | | WO 2015067349 A1 | 14-05-2015 |
| | | WO 2015067350 A1 | 14-05-2015 |
| | | WO 2015067351 A1 | 14-05-2015 |
| | | WO 2015067352 A1 | 14-05-2015 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1975577 A1
- EP 3066430 B1